# EUROPÄISCHE PATENTSCHRIFT

(11) **EP 1 261 663 B1**
(45) Veröffentlichungstag und Bekanntmachung des Hinweises auf die Patenterteilung: **28.12.2011**
(21) Anmeldenummer: 01951148.4
(22) Anmeldetag: 30.01.2001
(51) Int. Cl.: C08K 9/04, C08K 9/06, G02B 5/20

(54) **IR-ABSORBIERENDE ZUSAMMENSETZUNGEN**
IR ABSORBING COMPOSITIONS
COMPOSITIONS ABSORBANT LES RAYONS INFRAROUGES

(30) Priorität: 11.02.2000 DE 10006208
(43) Veröffentlichungstag der Anmeldung: 04.12.2002
(73) Patentinhaber: Leibniz-Institut für Neue Materialien gemeinnützige GmbH, 66123 Saarbrücken (DE)
(72) Erfinder: DÖBLER, Martin, 40593 Düsseldorf (DE); HOHEISEL, Werner, 51061 Köln (DE); SCHMIDT, Helmut, 66130 Saarbrücken (DE); NONNINGER, Ralph, 66126 Saarbrücken (DE); SCHICHTEL, Martin, 66125 Saarbrücken (DE); JOST, Martin, 66265 Heusweiler (DE)
(74) Vertreter: Gierlich, Johannes
(86) Internationale Anmeldenummer: PCT/EP2001/000961
(87) Internationale Veröffentlichungsnummer: WO 2001/059003

(56) Entgegenhaltungen:
- EP-A- 0 687 923
- US-A- 5 518 810
- DATABASE WPI Section Ch, Week 199612 Derwent Publications Ltd., London, GB; Class A35, AN 1996-111440 XP002164802 & JP 08 011266 A (AISIN SEIKI KK), 16. Januar 1996 (1996-01-16) in der Anmeldung erwähnt
- DATABASE WPI Section Ch, Week 199616 Derwent Publications Ltd., London, GB; Class A82, AN 1996-157341 XP002164803 & JP 08 041441 A (SUMITOMO METAL MINING CO), 13. Februar 1996 (1996-02-13) in der Anmeldung erwähnt

## Beschreibung

Die vorliegende Erfindung betrifft Zusammensetzungen enthaltend transparente thermoplastische Polymere und oberflächenmodifizierte Oxidteilchen mit einer Teilchengröße von weniger als 200 nm sowie deren Herstellung, deren Verwendung und daraus hergestellte Erzeugnisse.

Verscheibungen aus Zusammensetzungen enthaltend transparente thermoplastische Polymere wie z.B. Polycarbonat bieten für den Automobilbereich und für Gebäude viele Vorteile gegenüber herkömmlichen Verscheibungen aus Glas, wie z.B. erhöhte Bruchsicherheit oder Gewichtsersparnis. Im Falle von Automobilverscheibungen erreicht man dadurch eine höhere Insassensicherheit bei Verkehrsunfällen und durch die Gewichtsersparnis einen niedrigeren Kraftstoffverbrauch. Schließlich lassen transparente thermoplastische Polymere und Zusammensetzungen, die transparente thermoplastische Polymere enthalten, aufgrund der einfacheren Formbarkeit eine wesentlich größere Designfreiheit zu.

Allerdings führt die hohe Wärmedurchlässigkeit (d.h. Durchlässigkeit für IR-Strahlung) von transparenten thermoplastischen Polymeren bei Sonneneinwirkung zu einer unerwünschten Erwärmung im Inneren. Wie bei Parry Moon, Journal of the Franklin Institute 230, Seiten 583-618 (1940), beschrieben ist, entfällt der größte Teil der solaren Energie neben dem sichtbaren Bereich des Lichtes zwischen 400 und 750 nm auf den Bereich des nahen Infrarots (NIR) zwischen 750 und 2500 nm. Eindringende Sonnenstrahlung wird z.B. im Inneren eines Automobils absorbiert und als langwellige Wärmestrahlung von 5 bis 15 µm emittiert. Da in diesem Bereich übliche Verscheibungsmaterialien und insbesondere transparente thermoplastische Polymere nicht transparent sind, kann die Wärmestrahlung nicht nach außen abstrahlen. Man erhält einen Treibhauseffekt. Um den Effekt möglichst klein zu halten sollte die Transmission der Verscheibungen im NIR möglichst minimiert werden. Übliche transparente thermoplastische Polymere wie z.B. Polycarbonat sind jedoch sowohl im sichtbaren Bereich, als auch im NIR transparent. Es werden daher z.B. Zusätze benötigt, welche im NIR eine möglichst geringe Transparenz aufweisen, bei weiterhin möglichst hoher Transparenz im sichtbaren Bereich des Spektrums.

In der Literatur sind verschiedene wärmeabweisende Systeme, die im NIR eine geringe Transmission haben, beschrieben worden. Einerseits sind Oberflächenbeschichtungen oder Lacksysteme bekannt, andererseits gibt es auch infrarotabsorbierende Additive für transparente thermoplastische Polymere. Auf Grund der Möglichkeit der wirtschaftlicheren Herstellbarkeit der Zusammensetzungen aus Polymer und Additiv wäre ein NIR-absorbierendes Additiv wünschenswert.

Bekannte NIR-absorbierende Additive sind z.B. organische Infrarotabsorber, z.B. beschrieben in J. Fabian, H. Nakazumi, H. Matsuoka, Chem.Rev. 92, Seite 1197 ff. (1992). Die meisten bekannten organischen NIR-Absorber absorbieren im Wellenlängenbereich von ca. 750 bis ca. 900 nm. Es sind in der Literatur aber keine organischen NIR-Absorber beschrieben, welche oberhalb von 1100 nm ihr Absorptionsmaximum besitzen und sich aufgrund ihrer thermischen Stabilität und Lichtechtheit für obengenannte Anwendungen in Verscheibungen eignen. Für eine vollständige Absorption der NIR-Strahlung zwischen 750 und 2500 nm fehlen somit geeignete organische Absorber.

Andererseits sind in der Literatur Lacksysteme mit NIR-absorbierenden Partikeln aus Indium-Zinn-Oxid (ITO) beschrieben worden. Derartige Additive absorbieren je nach Zusammensetzung und Konzentration in einem wesentlich größeren Bereich des NIR. Aus JP-A 08011266, JP-A 0707482 und aus JP-A 08041441 sind ITO-Partikel bekannt, welche in einer organischen oder anorganischen Matrix eines Lackes eingebettet sind und NIR-Licht effektiv absorbieren bei gleichzeitiger hoher Transparenz im sichtbaren Bereich.

Die im vorherigen Absatz beschriebenen Lacksysteme haben jedoch die Nachteile, dass ein aufwendiger Lackierschritt erforderlich ist und das es im übrigen nicht möglich ist, eine ausreichende Menge an ITO in die bekannten Lacksysteme einzubringen, ohne dass diese instabil werden.

In JP-A 070278795 wird Polycarbonat mit herkömmlichem ITO mit Hilfe eines Kneters gemischt. Es wurden jedoch keine Aussagen bezüglich der Transparenz der Mischung gegeben. Herkömmliches ITO ergibt mit Polycarbonat trübe Komposite. Dies ist für viele der hier gewünschten Anwendungen, z.B. für Verscheibungen, ungeeignet.

Herkömmliche NIR-absorbierende Nanopartikel (im folgenden sollen unter Nanopartikel Teilchen mit einer Größe von weniger als 200 nm verstanden werden), die aufgrund ihrer Kleinheit unsichtbar sind, wenn sie fein verteilt sind, eignen sich zwar zur Einbringung in ein Lacksystem jedoch nicht zum Einarbeiten in ein thermoplastisches Polymer, da die Nanopartikel unter den üblichen Einarbeitungsbedingungen agglomerieren und somit aufgrund von Lichtstreuung an den Agglomeraten trübe Zusammensetzungen bilden.

Wünschenswert sind somit z.B. NIR-absorbierende Nanopartikel, welche einerseits in einem großen Bereich des NIR absorbieren, jedoch gleichzeitig eine hohe Transparenz im sichtbaren Bereich des elektromagnetischen Spektrums aufweisen, und welche sich in transparente thermoplastische Polymere einarbeiten lassen, ohne zur agglomerieren.

US-A-5518810 beschreibt Zusammensetzungen, die NIR-absorbierende Nanopartikel wie ITO und ein transparentes thermoplastisches Polymer enthalten. Die Zusammensetzung kann ein Dispergiermittel enthalten.

EP-A-687923 beschreibt Infrarot-absorbierende optische Filter aus einem transparenten Substrat aus einem organischen Polymer, das Oxidteilchen wie ITO oder ATO enthalten kann.

Der vorliegenden Erfindung liegt die Aufgabe zugrunde Zusammensetzungen bereitzustellen, die im Bereich des nahen Infrarots (NIR) zwischen 750 und 2500 nm eine möglichst hohe Absorption aufweisen und gleichzeitig im Bereich des sichtbaren Lichtes zwischen 400 und 750 nm eine möglichst hohe Transparenz aufweisen. Dabei soll das übrige Spektrum an Werkstoffeigenschaften der Zusammensetzung möglichst nicht beeinträchtigt werden. Die Nachteile der aus dem Stand der Technik bekannten Zusammensetzungen sollen überwunden werden.

Es wurde nun überraschend gefunden, dass durch Zusatz von oberflächenmodifizierten Oxiden mit einer Teilchengröße von weniger als 200 nm zu transparenten thermoplastischen Polymeren Zusammensetzungen erhalten werden, welche im sichtbaren Bereich des Lichts eine hohe Transparenz aufweisen und gleichzeitig im nahen Infrarot eine intensive Absorption zeigen. Diese Zusammensetzungen können z. B. durch Extrusion oder mittels eines Kneters hergestellt werden.

Die erfindungsgemäßen Zusammensetzungen haben zahlreiche Vorteile. Die durch das transparente thermoplastische Polymer und gegebenenfalls durch weitere vorhandene Additive bestimmten Werkstoffeigenschaften der Zusammensetzungen werden durch die erfindungsgemäßen Oxidteilchen nicht wesentlich beeinträchtigt.

Außerdem haben die erfindungsgemäßen Zusammensetzungen die Vorteile hoher Lichtbeständigkeit, hoher thermischer Beständigkeit sowie den Vorteil, dass sie keinen optischen Gelbstich aufweisen.

Gegenstand der Erfindung sind somit Zusammensetzungen enthaltend
a) ein transparentes thermoplastisches Polymer und
b) Oxidteilchen ausgewählt aus der Gruppe bestehend aus Indiumoxid, in dem 2 bis 30 % der Indium-Atome durch Zinnatome ersetzt sind, Indiumoxid, in dem 10 bis 70 % der Sauerstoffatome durch Fluoratome ersetzt sind, Zinnoxid, in dem 2 bis 60 % der Zinnatome durch Antimonatome ersetzt sind, Zinnoxid, in dem 10 bis 70 % der Sauerstoffatome durch Fluoratome ersetzt sind, Zinkoxid, in dem 1 bis 30 % der Zinkatome durch Aluminiumatome ersetzt sind, Zinkoxid, in dem 2 bis 30 % der Zinkatome durch Indiumatome ersetzt sind, Zinkoxid, in dem 2 bis 30 % der Zinkatome durch Galliumatome ersetzt sind, Perowskite, und Verbindungen der Zusammensetzung AₓBO_{3-y}, wobei
   0,01 < x < 3 ist,
   bevorzugt 0,1 < x < 1 und
   0,001 < y <1,5 ist,
   bevorzugt 0,1 < y < 0,5 ist,
   und
   A= Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H oder NH₄ ist,
   B = W, Mo oder Re ist und
   wobei die durchschnittliche Teilchengröße der Oxidteilchen (gemessen durch Ultrazentrifugation) kleiner als 200 nm ist,
   und wobei die Oberfläche der Oxidteilchen mit einem Polyvinylacetal modifiziert ist oder
   Oxidteilchen ausgewählt aus der Gruppe bestehend aus Indiumoxid, in dem 10 bis 70 % der Sauerstoffatome durch Fluoratome ersetzt sind, Zinnoxid, in dem 10 bis 70 % der Sauerstoffatome durch Fluoratome ersetzt sind, Zinkoxid, in dem 1 bis 30 % der Zinkatome durch Aluminiumatome ersetzt sind, Zinkoxid, in dem 2 bis 30 % der Zinkatome durch Indiumatome ersetzt sind, Zinkoxid, in dem 2 bis 30 % der Zinkatome durch Galliumatome ersetzt sind, Perowskite, und Verbindungen der Zusammensetzung AₓBO_{3-y}, wobei
   0,01 < x < 3 ist,
   bevorzugt 0,1 < x < 1 und
   0,001 < y < 1,5 ist,
   bevorzugt 0,1 < y < 0,5 ist,
   und
   A= Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H oder NH₄ ist,
   B = W, Mo oder Re ist und
   wobei die durchschnittliche Teilchengröße der Oxidteilchen (gemessen durch Ultrazentrifugation) kleiner als 200 nm ist,
   und wobei die Oberfläche der Oxidteilchenmit einer Verbindung der allgemeinen Formel (I)

   SiR¹R²R³R⁴ (I)

   mit
   R¹ = Alkylsubstituent mit 1 bis 30, bevorzugt 6 bis 20, besonders bevorzugt 12 bis 18 C-Atomen,
   R² = Alkylsubstituent mit 1 bis 30, bevorzugt 1 bis 18, besonders bevorzugt 1 bis 6, C-Atomen oder Alkoxysubstituent mit 1 bis 30, bevorzugt 1 bis 6, besonders bevorzugt 1 bis 2, C-Atomen oder Cl oder Br oder I,
   R³ = Alkylsubstituent mit 1 bis 30, bevorzugt 1 bis 18, besonders bevorzugt 1 bis 6, C-Atomen oder Alkoxysubstituent mit 1 bis 30, bevorzugt 1 bis 6, besonders bevorzugt 1 bis 2, C-Atomen oder Cl oder Br oder I,
   R⁴ = Alkoxysubstituent mit 1 bis 30, bevorzugt 1 bis 6, besonders bevorzugt 1 bis 2, C-Atomen oder Cl oder Br oder I,
   modifiziert ist,
   und wobei die Oxidteilchen bevorzugt in einer Menge von 0,01 bis 30 Gewichtsteilen, besonders bevorzugt 0,1 bis 2 Gewichtsteilen, pro 100 Gewichtsteile transparentem, thermoplastischem Polymer vorliegen.

Gegenstand der Erfindung ist somit die Verwendung der genannten Oxidteilchen zur Herstellung von Zusammensetzungen enthaltend
a) ein transparentes thermoplastisches Polymer und
b) die Oxidteilchen, bevorzugt in einer Menge von 0,01 bis 30 Gewichtsteilen, besonders bevorzugt 0,1 bis 2 Gewichtsteilen, pro 100 Gewichtsteile transparentem, thermoplastischem Polymer

Außerdem ist Gegenstand der Erfindung ein Verfahren zur Herstellung einer Zusammensetzung aus einem transparenten thermoplastischen Polymer und Oxidteilchen ausgewählt aus der Gruppe bestehend aus Indiumoxid, in dem 2 bis 30 % der Indium-Atome durch Zinnatome ersetzt sind, Indiumoxid, in dem 10 bis 70 % der Sauerstoffatome durch Fluoratome ersetzt sind, Zinnoxid, in dem 2 bis 60 % der Zinnatome durch Antimonatome ersetzt sind, Zinnoxid, in dem 10 bis 70 % der Sauerstoffatome durch Fluoratome ersetzt sind, Zinkoxid, in dem 1 bis 30 % der Zinkatome durch Aluminiumatome ersetzt sind, Zinkoxid, in dem 2 bis 30 % der Zinkatome durch Indiumatome ersetzt sind, Zinkoxid, in dem 2 bis 30 % der Zinkatome durch Galliumatome ersetzt sind, Perowskite, und Verbindungen der Zusammensetzung AₓBO_{3-y},
wobei
0,01 < x < 3 ist,
bevorzugt 0,1 < x < 1 und
0,001 < y < 1,5 ist,
bevorzugt 0,1 < y < 0,5 ist,
und
A = Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H oder NH₄ ist und
B = W, Mo oder Re ist,
indem Vorstufen der Oxidteilchen in Gegenwart einer oder mehrerer oberflächenmodifizierenden Komponenten gefällt werden, die erhaltenen Pulver unter reduzierenden Bedingungen kalziniert werden und danach die Oberfläche der Teilchen mit einem Polyvinylacetal oder mit einer Verbindung der allgemeinen Formel (I)

SiR¹R²R³R⁴ (I)

wobei für R¹, R², R³ und R⁴ die gegebenen Definitionen gelten, modifiziert werden,
durch Zugabe der Oxidteilchen vor, während oder nach der Polymerisation des transparenten, thermoplastischen Polymeren zu dem transparenten
thermoplastischen Polymeren oder den Monomeren, aus denen das transparente thermoplastische Polymer polymerisiert wird.

Weiterhin ist Gegenstand der Erfindung die Verwendung der genannten Zusammensetzungen zur Herstellung von Platten, Folien, Verscheibungen, Bedachungen oder anderen Erzeugnissen.

Weiterhin ist Gegenstand der Erfindung ein Verfahren zur Herstellung von Erzeugnissen aus den genannten Zusammensetzungen umfassend die Verarbeitung der Zusammensetzungen durch Extrusion oder Spritzguss.

Außerdem sind Gegenstand der Erfindung Erzeugnisse enthaltend die genannten Zusammensetzungen. Bevorzugt ist hierbei, dass die Erzeugnisse im wesentlichen die genannten Zusammensetzungen enthalten. Besonders bevorzugt ist hierbei das die Erzeugnisse aus den genannten Zusammensetzungen bestehen.

Insbesondere sind Gegenstand der Erfindung Platten oder Folien oder Verscheibungen oder Bedachungen, enthaltend die genannten Zusammensetzungen. Bevorzugt ist hierbei, dass die Platten oder Folien oder Verscheibungen oder Bedachungen im wesentlichen die genannten Zusammensetzungen enthalten. Besonders bevorzugt ist hierbei, dass die Platten oder Folien oder Verscheibungen oder Bedachungen aus den genannten Zusammensetzungen bestehen.

Erfindungsgemässe bevorzugte Oxidteilchen sind Oxidteilchen aus Indiumoxid, in dem 2 bis 30 % der Indiumatome durch Zinnatome ersetzt sind (sogenanntes zinndotiertes Indiumoxid ; Abk. : ITO). Besonders bevorzugt ist dabei Indiumoxid, in dem 4 bis 12 % der Indiumatome durch Zinnatome ersetzt sind.

Weiterhin sind bevorzugte Oxidteilchen solche, bestehend aus Zinnoxid, in dem 2 bis 60 % der Zinnatome durch Antimonatome ersetzt sind (sog. antimondotiertes Zinnoxid ; Abk. : ATO).

Weiterhin bevorzugte Oxidteilchen sind solche, bestehend aus Indiumoxid, in dem 10 bis 70 % der Sauerstoffatome durch Fluoratome ersetzt sind (sog. fluordotiertes Zinnoxid ; Abk. : FTO).

Weiterhin bevorzugte Oxidteilchen sind solche, bestehend aus Zinkoxid, in dem 1 bis 30 % der Zinkatome durch Aluminiumatome ersetzt sind (sog. aluminiumdotiertes Zinkoxid ; Abk. : AZO).

Die durchschnittliche Teilchengröße der erfindungsgemäßen Oxidteilchen (gemessen durch Ultrazentrifugation) ist kleiner als 200 nm. Sie ist bevorzugt zwischen 3 nm und 200 nm, besonders bevorzugt zwischen 5 nm und 50 nm, ganz besonders bevorzugt zwischen 5 nm und 30 nm.

Die erfindungsgemäßen Oxidteilchen werden durch eine spezielle Oberflächenbehandlung (auch Oberflächenmodifikation genannt) mit Oberflächenmodifikatoren vor Agglomeration bei der Verarbeitung (z. B. der Herstellung der erfindungsgemäßen Zusammensetzungen) geschützt. Für eine Oberflächenbehandlung sind Polyvinylacetale und Verbindungen der allgemeinen Formel (I) geeignet:

SiR¹R²R³R⁴ (I)

wobei für R¹, R², R³ und R⁴ die gegebenen Definitionen gelten.

Besonders geeignet sind n-Octadecyltrimethoxysilan, n-Hexadecyltrimethoxysilan, Methyl-n-octadecyldimethoxysilan, Dimethyl-n-octadecylmethoxysilan, n-Dodecyltriethoxysilan, n-Octadecylmethyldiethoxysilan.

Ganz besonders geeignet sind n-Octadecyltrimethoxysilan und n-Hexadecyltrimethoxysilan.

Ferner sind geeignet Polyvinylacetale, besonders Polyvinylbutyral (PVB).

Es sind auch Mischungen aus mehreren der genannten Oberflächenmodifikatoren geeignet.

Die Verbindungen SiR¹R²R³R⁴ der allgemeinen Formel (I) sind nach bekannten Methoden herstellbar. Sie sind auch im Handel erhältlich, beispielsweise bei der Fa. Aldrich (D-89555 Steinheim, Deutschland)

Die Oberflächenmodifikation der erfindungsgemäßen Oxidteilchen kann nach beliebigen dem Fachmann bekannten Verfahren durchgeführt werden.

Die Herstellung der erfindungsgemäßen Oxidteilchen kann nach bekannten Verfahren erfolgen. Erfindungsgemäß 'wird ein Cofallungsprozess von Salzen der verwendeten Bestandteile in Gegenwart einer oder mehreren oberflächenmodifizierten Komponenten verwendet. Nach Entfernung des Lösungsmittels werden dabei die erhaltenen Pulver unter reduzierenden Bedingungen kalziniert und dann nach Zugabe von Additiven und eines weiteren Oberflächenmodifikators (Dispergierhilfe) einer mechanischen Zerkleinerungsbehandlung unterworfen.

Bei der oberflächenmodifizierenden Komponente, welche bei der Herstellung der erfindungsgemäßen Oxidteilchen verwendet werden, sind folgende Verbindungen verwendbar:
1. Gruppe der Mono-und Polycarbonsäuren, wie z. B. Essigsäure, Propionsäure, Buttersäure, Pentansäure, Hexansäure, Acrylsäure, Metacrylsäure, Crotonsäure, Zitronensäure, Adipinsäure, Bernsteinsäure, Glutansäure, Oxalsäure, Maleinsäure, Stearinsäure und insbesondere Trioxadekansäure sowie den entsprechenden Anhydriden.
2. Betacarbonylverbindungen, insbesondere Acetylaceton, 2,4-Hexandion, 3,5-Heptandion, Acetessigsäure und Acetessigsäurealkylester.
3. Aminosäuren, insbesondere (3-Alanin.
4. Doppelkammpolymere, insbesondere Tween80^{®}.
5. Säureamide, insbesondere Caprolactam.

Für die Herstellung des besonders bevorzugten Oxides ITO kommen als Ausgangssubstanzen besonders Indiumchlorid, Indiumnitrat, Indiumacetat, Indiumsulfat oder Indiumalkoxide bzw. Zinnchlorid, Zinnsulfat oder Zinnalkoxiden in Frage. Primäre, sekundäre, tertiäre, aliphatische oder aromatische Amine, Tetramethylammoniumhydroxid, NaOH, KOH, Ammoniak (gasförmig) und insbesondere Ammoniumhydroxid werden zur Fällung der Indium- und Zinnprecusor bevorzugt eingesetzt. Die Kalzinierung der so erhaltenen Pulver (ein Indiumzinnoxid-Hydroxid-Gemisches) erfolgt bevorzugt unter reduzierenden Bedingungen bei Temperaturen zwischen 200 und 400°C (bevorzugt 250°C). Die isotherme Haltezeit beträgt z.B. zwischen 15 und 120 min, bevorzugt 60 min. Die Reduktion kann durch Kohlenmonoxid oder Kohlenmonoxidstickstoff oder Wasserdampf, Wasserstoff oder Formiergas (Wasserstoff, Stickstoff) erfolgen. Zur Suspensionsherstellung werden unter Verwendung der schon oben genannten oberflächenaktiven Substanzen die Pulver z.B. über einen mechanischen Zerkleinerungsprozess dispergiert. Die Zerkleinerung erfolgt z.B. in Planetkugelmühlen, Rührwerkskugelmühlen und insbesondere in der Mörsermühle und im Walzenstuhl in Lösungsmitteln wie Wasser, Toluol, aber insbesondere in Ethylenglykol oder Diethylenglykolmonobutylether.

Bezogen auf 100 Gewichtsteile erfindungsgemäße Oxidteilchen werden die Oberflächenmodifikatoren bevorzugt in Mengen von 10 bis 2 000 Teilen, besonders bevorzugt in Mengen von 90 bis 1 000 Teilen und ganz besonders bevorzugt in Mengen von 90 bis 600 Teilen eingesetzt.

Transparente thermoplastische Polymere im Sinne der Erfindung sind z.B. Polycarbonate, aromatische Polyester, wie z.B. PET, PEN oder PETG, transparente thermoplastische Polyurethane, transparente Acrylate und Methacrylate wie z.B. PMMA, sowie Polyolefine, wie z.B. transparente Polypropylentypen oder Polyolefine auf der Basis von cyclischen Olefinen (z.B. TOPAS^{®}, ein Handelsprodukt der Firma Hoechst). Auch Mischungen von mehreren transparenten thermoplastischen Polymeren sind möglich.

Bevorzugt sind Polycarbonate oder Copolycarbonate.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Polycarbonate im Sinne der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Phy sics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, á,á'-Bis-(hydroxyphenyl)-diisopropylbenzole, sowie deren kerlalkylierte und kernhalogenierte Verbindungen.

Bevorzugte Diphenole sind 4,4'-Dihydroxydiphenyl, 2,2Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-düsopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2 Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 835, US-A 3 148 172, US-A 2 991273, US-A 3 271 367, US-A 4 982 014 und US-A 2 999 846, in DE-A 1 570 703, DE-A 2 063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Falle der Homopolycarbonate ist nur ein Diphenol eingesetzt, im Falle der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol 2,4,6-Trijodphenol, p-Jodphenol, sowie deren Mischungen.

Bevorzugter Kettenabbrecher ist p-tert.-Butylphenol.

Geeignete Monocarbonsäuren sind weiterhin Benzoesäure, Alkylbenzoesäuren und Halogenbenzoesäuren.

Bevorzugte Kettenabbrecher sind die Phenole der Formel (II) 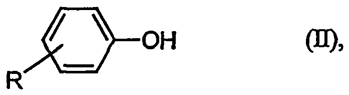 worin

R Wasserstoff oder ein C1-C30 Allylrest linear oder verzweigt ist, bevorzugt tert-Butyl ist oder ein verzweigter oder unverzweigter C₈- und/oder C₉-Alkylrest ist.

Die Menge an einzusetzendem Kettenabbrecher beträgt bevorzugt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Falle des Umesterungsverfahrens werden die Verzweiger zusammen mit den Diphenolen eingesetzt.

Die erfindungsgemäßen Zusammensetzungen können ferner noch übliche Polymeradditive enthalten, wie z.B. die in EP-A 0 839 623, WO 96/15102 und EP-A 0 500 496 beschriebenen UV-Stabilisatoren, Antioxidantien und Entformungsmittel, aber auch literaturbekannte Flammschutzmittel, Glasfasern, Füllstoffe, Schaummittel, Pigmente, optische Aufheller oder Farbstoffe, in den für die jeweiligen Thermoplasten üblichen Mengen. Bevorzugt sind Mengen von jeweils bis zu 5 Gew.%, bevorzugt 0,01 bis 5 Gew.% bezogen auf die Menge der Zusammensetzungen, besonders bevorzugt 0,01 Gew.% bis 1 Gew.% bezogen auf die Menge der Zusammensetzungen. Auch Mischungen mehrerer Zusatzstoffe sind geeignet.

Besonders geeignet als UV-Absorber sind Benzotriazole, Triazine, Benzophenone, sowie weitere Verbindungen wie z.B. arylierte Cyanoacrylate. Erfindungsgemäß ganz besonders bevorzugt geeignet sind Hydroxy-Benzotriazole, wie 2-(3',5-'Bis-(1,1-dimethylbenzyl)-2'-hydroxy-phenyl)-benzotriazol (Tinuvin^{®} 234, Ciba Spezialitätenchemie, Basel), Tinuvin^{®} 326 FL (Ciba Spezialitätenchemie, Basel), 2-(2'-Hydroxy-5'-(tert-octyl)-phenyl)-benzotriazol (Tinuvin^{®} 329, Ciba Spezialitätenchemie, Basel), 2-(2'-Hydroxy-3'-(2-butyl)-5'-(tert-butyl)-phenyl)-benzotriazol (Tinuvin^{®} 350, Ciba Spezialitätenchemie, Basel), Bis-(3-(2H-benztriazolyl)-2-hydroxy-5-tert-octyl)methan, (Tinuvin^{®} 360, Ciba Spezialitätenchemie, Basel), 2-(4-Hexoxy-2-hydroxyphenyl)-4,6-diphenyl-1,3,5-triazin (Tinuvin^{®} 1577, Ciba Spezialitätenchemie, Basel), sowie das Benzophenon 2,4-Dihydroxy-benzophenon (Chimasorb22^{®}, Ciba Spezialitätenchemie, Basel).

Bevorzugt werden die UV-Absorber in Mengen von jeweils zwischen 0.001 Gew.% und 10 Gew.%, bevorzugt 0.01 Gew.% und 1 Gew.% vorzugsweise zwischen 0.1-1 Gew.% und ganz besonders bevorzugt zwischen 0.2 und 0.6 Gew.% eingesetzt.

Es ist bevorzugt, dass die als Verunreinigung vorhandenen Ionengehalte in den erfindungsgemäßen Zusammensetzungen weniger als 10 ppm betragen, besonders bevorzugt weniger als 5 ppm.

Die Maßnahmen zur Herstellung der thermoplastischen Polycarbonate sind dem Fachmann geläufig.

Die erfindungsgemäßen Zusammensetzungen können nach den üblichen Methoden, wie z.B. Heißpressen, Spinnen, Extrudieren oder Spritzgießen, in Erzeugnisse, d.h. geformte Gegenstände überführt werden, wie z.B. Fasern, Folien, Bändchen, Platten, Stegplatten, Gefäße, Rohre und sonstige Profile. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Die erfindungsgemäßen Zusammensetzungen können zu Erzeugnissen verarbeitet werden, in dem man beispielsweise die Zusammensetzungen zu Granulat extrudiert und dieses Granulat, gegebenenfalls nach Zusatz der obengenannten Additive, durch Spritzguss oder Extrusion zu verschiedenen Erzeugnissen in bekannter Weise verarbeitet.

Die erfindungsgemäßen Zusammensetzungen können ferner noch übliche Thermostabilisatoren enthalten. Als Thermostabilisatoren sind erfindungsgemäß besonders geeignet: gehinderte Phenole, beispielsweise Octadecyl-3-(3',5'-di-*tert*-butyl-4'-hydroxyphenyl)-propionat (Irganox^{®} 1076, Ciba Specialty Chemicals, Basel, Schweiz). Weiterhin sind erfindungsgemäß besonders geeignete Thermostabilisatoren Phosphite, insbesondere Tris(2,4-di-*tert*-butyl-phenyl)-phosphit (Irgafos^{®} 168, Ciba Specialty Chemicals, Basel, Schweiz) oder Phosphine, wie z.B. Triphenylphosphin.

Die erfindungsgemäßen Zusammensetzungen können übliche Entformungsmittel enthalten. Besonders geeignete Entformungsmittel sind Pentaerythrittetrastearat (PETS) oder Glycerinmonostearat (GMS).

Erfindungsgemäß bevorzugte Erzeugnisse sind Platten, Folien, Verscheibungen, beispielsweise Autosonnendächer, Bedachungen oder Gebäudeverglasungen, die die erfindungsgemäßen Zusammensetzungen enthalten. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialien am Rand der Verscheibungen enthalten. Bedachungen können beispielsweise Metallkomponenten wie Schrauben oder ähnliches enthalten die zur Befestigung der Bedachungselemente dienen können.

Die erfindungsgemäßen Zusammensetzungen sind als transparente Erzeugnisse universell einsetzbar, wo Wärmedurchlässigkeit unerwünscht ist. Besonders geeignet ist die Anwendung bei Automobilkomponenten, wie z.B. Verscheibungselementen oder Kunststoffstreuscheiben. Ebenfalls besonders geeignet ist die Anwendung bei extrudierten Platten, wie z.B. Massivplatten, Doppelstegplatten oder Multistegplatten, optional auch mit einer oder mehreren coextrudierten Schichten, sowie die Anwendung in Spritzgussteilen, wie Lebensmittelbehältern, Bestandteilen von Elektrogeräten und in Brillengläsern z.B. auch für Schutzbrillen.

### Beispiele:

Zur Herstellung der Probekörper in den Beispielen wurde ein additivfreies, unstabilisiertes Polycarbonat (Makrolon^{®} 2808 der Bayer AG, Leverkusen) mit einem mittleren Molekulargewicht von ca. 28 000 (M_{w} nach GPC), einer Lösungsviskosität von η=1,28 (5 g/l Methylenchlorid, bei 25°C), bei 300°C auf einem Extruder mit der angegebenen Menge Additiv kompoundiert und anschließend granuliert. Aus diesem Granulat wurden anschließend Farbmusterplatten nach dem Spritzgussverfahren hergestellt (76 mm x 50 mm x 2.5 mm).

### Beispiel 1:

140 g Indium(III]chlorid (0.63 mol, wasserfrei), 18 g Zinn(IV)chlorid x 5 H₂O und 5.6 g Caprolactam wurden in 1400 ml Wasser gegeben und gerührt. Nachdem eine klare Lösung entstanden war, wurde diese auf 50°C erwärmt. Nachdem die Temperatur erreicht war, tropfte man unter heftigem Rühren 105 ml Ammoniumhydroxidlösung (25 %) zu. Die Suspension wurde bei einer Temperatur von 50°C weitere 24 Stunden gerührt. Zur vollständigen Fällung wurden dem Gemisch danach noch 280 ml Ammoniumhydroxidlösung hinzugefügt. Es bildete sich ein weißer Niederschlag aus Indiumhydroxid, der abzentrifugiert wurde (30 min bei 4000 U/min). Das Pulver wurde im Vakuumtrockenschrank bei 190°C so lange getrocknet, bis eine leichte Gelbfärbung des Pulvers festzustellen war. Das getrocknete Pulver wurde fein gemörsert, in Kristallisationsschalen verteilt und in einen Formiergasofen gestellt. Der Ofen wurde evakuiert, dann mit Stickstoff geflutet. Der Ofen wurde mit einer Heizrate von 250°C/Stunde auf 250°C aufgeheizt bei einem Stickstofffluss von 200 Liter/Stunde. Diese Temperatur wurde für 60 Minuten unter Formiergasatmosphäre bei einem Gasfluss von 300 Liter/Stunde gehalten. Danach kühlte der Ofen unter Stickstoffatmosphäre bis auf Raumtemperatur ab (Dauer ca. 5 Stunden). Hieraus resultierte dunkelbraunes ITO-Pulver.

### Beispiel 2:

ITO wurde gemäß Beispiel 1 hergestellt. Zu 100 Teilen einer 20 % Suspension davon in Ethanol wurden 20 Teile n-Octadecyltrimethoxysilan gegeben und 1 min in einem Ultraschallbad behandelt. Schließlich wurde das Lösungsmittel bei 60°C und 100 mbar abdestilliert. Man erhielt nanoskaliges Indiumzinnoxid (ITO) mit einer durchschnittlichen Partikelgröße von kleiner als 50 nm.

### Beispiel 3:

Ein aromatisches Polycarbonat aus 2,2-Bis-(4-hydroxyphenyl)-propan mit Phenol als Kettenabbrecher wurde bei 110°C vorgetrocknet und anschließend bei 280°C auf einem Doppelwellenextruder aufgeschmolzen. Dann dosierte man 0.8 Gew.% bzw. 1.5 Gew.% frisch hergestelltes, oberflächenmodifiziertes, nanoskaliges ITO (Beispiel 2) direkt in die Polycarbonatschmelze. Der Polymerstrang wurde gekühlt und granuliert. Das Granulat wurde im Vakuumtrockenschrank bei 80°C getrocknet und auf einer Spritzgussmaschine bei 280°C zu Prüfkörpern mit den Abmessungen 60 mm x 60 mm x 2 mm verspritzt. Die Transmission der Prüfkörper war sehr hoch im sichtbaren Bereich des Lichtes und sehr gering im NIR (siehe Tabelle 1).

### Vergleichsbeispiel 1:

In JP-A 08041441 wurden ITO-Komposite beschrieben. Das Komposit mit der stärksten Absorption im NIR (dort als Beispiel Nr. 2 bezeichnet) wurde als Vergleichsbeispiel 1 ausgewählt.

In Tabelle 1 werden die Transmissionen der Zusammensetzungen gemäß Vergleichsbeispiel 1 bei verschiedenen Wellenlängen mit den erfinderischen Beispielen 3a und 3b verglichen.

**Tabelle 1: Transmissionen im NIR von den ITO-haltigen Zusammensetzungen**

| Wellenlänge | Beispiel 3a | Beispiel 3b | Vergleichsbsp.1 |
|---|---|---|---|
| 300 nm | 0% | 0% | 0% |
| 400 nm | 35 % | 31 % | 52% |
| 500 nm | 60% | 57 % | 73 % |
| 600 nm | 67 % | 57 % | 76% |
| 700 nm | 65 % | 46% | 71 % |
| 800 nm | 56% | 31 % | 66% |
| 900 nm | 41 % | 16% | 58 % |
| 1000 nm | 24 % | 5 % | 46% |
| 1100 nm | 10% | 1% | 30% |

Wie aus Tabelle 1 ersichtlich ist, ist die Transmission im NIR bei den Beispielen 3a und 3b wesentlich geringer als im Falle des Vergleichsbeispieles 1.

## Patentansprüche

1. Zusammensetzungen enthaltend
a) ein transparentes thermoplastisches Polymer und
b) Oxiddteilchen ausgewählt aus der Gruppe bestehend aus Indiumoxid, in dem 2 bis 30 % der Indium-Atome durch Zinnatome ersetzt sind, Indiumoxid, in dem 10 bis 70 % der Sauerstoffatome durch Fluoratome ersetzt sind, Zinnoxid, in dem 2 bis 60 % der Zinnatome durch Antimonatome ersetzt sind, Zinnoxid, in dem 10 bis 70 % der Sauerstoffatome durch Fluoratome ersetzt sind, Zinkoxid, in dem 1 bis 30 % der Zinkatome durch Aluminiumatome ersetzt sind, Zinkoxid, in dem 2 bis 30 % der Zinkatome durch Indiumatome ersetzt sind, Zinkoxid, in dem 2 bis 30 % der Zinkatome durch Galliumatome ersetzt sind, Perowskite, und Verbindungen der Zusammensetzung AₓBO_{3-y},
wobei
0,01 < x < 3 ist,
0,001 < y < 1,5 ist,
A = Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H oder NH₄ ist und
B = W, Mo oder Re ist,
und wobei die durchschnittliche Teilchengröße, gemessen durch Ultrazentrifugation, kleiner als 200 nm ist,
und wobei die Oberfläche der Oxidteilchen mit einem Polyvinylacetal modifiziert ist, oder
Oxiddteilchen ausgewählt aus der Gruppe bestehend aus Indiumoxid, in dem 10 bis 70 % der Sauerstoffatome durch Fluoratome ersetzt sind, Zinnoxid, in dem 10 bis 70 % der Sauerstoffatome durch Fluoratome ersetzt sind, Zinkoxid, in dem 1 bis 30 % der Zinkatome durch Aluminiumatome ersetzt sind, Zinkoxid, in dem 2 bis 30 % der Zinkatome durch Indiumatome ersetzt sind, Zinkoxid, in dem 2 bis 30 % der Zinkatome durch Galliumatome ersetzt sind, Perowskite, und Verbindungen der Zusammensetzung AₓBO_{3-y},
wobei
0,01 < x < 3 ist,
0,001 < y < 1,5 ist,
A = Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H oder NH₄ ist und
B = W, Mo oder Re ist,
und wobei die durchschnittliche Teilchengröße, gemessen durch Ultrazentrifugation, kleiner als 200 nm ist,
und wobei die Oberfläche der Oxidteilchen mit einer Verbindung der allgemeinen Formel (I)
SiR¹R²R³R⁴ (I)
R¹ = Alkylsubstituent mit 1 bis 30 C-Atomen,
R² = Alkylsubstituent mit 1 bis 30 C-Atomen oder Alkoxysubstituent mit 1 bis 30 C-Atomen oder Cl oder Br oder I,
R³ = Alkylsubstituent mit 1 bis 30 C-Atomen oder Alkoxysubstituent mit 1 bis 30 C-Atomen oder Cl oder Br oder I,
R⁴ = Alkoxysubstituent mit 1 bis 30 C-Atomen oder Cl oder Br oder I,
modifiziert ist.

2. Verwendung der Oxidteilchen nach Anspruch 1 zur Herstellung der Zusammensetzungen nach Anspruch 1.

3. Verfahren zur Herstellung einer Zusammensetzung aus einem transparenten thermoplastischen Polymer und Oxidteilchen ausgewählt aus der Gruppe bestehend aus Indiumoxid, in dem 2 bis 30 % der Indium-Atome durch Zinnatome ersetzt sind, Indiumoxid, in dem 10 bis 70 % der Sauerstoffatome durch Fluoratome ersetzt sind, Zinnoxid, in dem 2 bis 60 % der Zinnatome durch Antimonatome ersetzt sind, Zinnoxid, in dem 10 bis 70 % der Sauerstoffatome durch Fluoratome ersetzt sind, Zinkoxid, in dem 1 bis 30 % der Zinkatome durch Aluminiumatome ersetzt sind, Zinkoxid, in dem 2 bis 30 % der Zinkatome durch Indiumatome ersetzt sind, Zinkoxid, in dem 2 bis 30 % der Zinkatome durch Galliumatome ersetzt sind, Perowskite, und Verbindungen der Zusammensetzung AₓBO_{3-y},
wobei
0,01 < x < 3 ist,
0,001 < y < 1,5 ist,
A = Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H oder NH₄ ist und
B = W, Mo oder Re ist,
indem Vorstufen der Oxidteilchen in Gegenwart einer oder mehrerer oberflächenmodifizierenden Komponenten gefällt werden, die erhaltenen Pulver unter reduzierenden Bedingungen kalziniert werden und danach die Oberfläche der Teilchen mit einem Polyvinylacetal oder mit einer Verbindung der allgemeinen Formel (I)
SiR¹R²R³R⁴ (I)
R² = Alkylsubstituent mit 1 bis 30 C-Atomen,
R² = Alkylsubstituent mit 1 bis 30 C-Atomen oder Alkoxysubstituent mit 1 bis 30 C-Atomen oder Cl oder Br oder I,
R³ = Alkylsubstituent mit 1 bis 30 C-Atomen oder Alkoxysubstituent mit 1 bis 30 C-Atomen oder Cl oder Br oder I,
R⁴ = Alkoxysubstituent mit 1 bis 30 C-Atomen oder Cl oder Br oder I,
modifiziert werden und die erhaltenen Oxidteilchen vor, während oder nach der Polymerisation des transparenten, thermoplastischen Polymeren zu dem transparenten thermoplastischen Polymeren oder den Monomeren, aus denen das transparente thermoplastische Polymer polymerisiert wird, gegeben werden.

4. Verfahren nach Anspruch 3, **dadurch gekennzeichnet,**
**dass**
die Reduktion bei der Kalzinierung durch Kohlenmonoxid, Kohlenmonoxidstickstoff, Wasserdampf, Wasserstoff oder Formiergas erfolgt.

5. Verfahren nach einem der Ansprüche 3 oder 4, **dadurch gekennzeichnet, dass**
das thermoplastische Polymer ein Polycarbonat oder Copolycarbonat ist.

6. Verfahren nach einem der Ansprüche 3 bis 5, **dadurch gekennzeichnet, dass**
die Oxidteilchen in einer Menge von 0,1 bis 2 Gewichtsteilen pro 100 Gewichtsteile transparentem, thermoplastischem Polymer zum Polymer gegeben werden.

7. Verwendung der Zusammensetzungen gemäß Anspruch 1 zur Herstellung von Platten, Folien, Verscheibungen, Bedachungen oder anderen Erzeugnissen.

8. Verfahren zur Herstellung von Erzeugnissen aus Zusammensetzungen gemäß Anspruch 1 umfassend die Verarbeitung der Zusammensetzungen durch Extrusion oder Spritzguss.

9. Erzeugnisse enthaltend die Zusammensetzungen gemäß Anspruch 1.

10. Platten oder Folien oder Verscheibungen oder Bedachungen, enthaltend die Zusammensetzungen gemäß Anspruch 1.

## Claims

1. Compositions comprising
a) a transparent thermoplastic polymer and
b) oxide particles selected from the group consisting of indium oxide in which from 2 to 30% of the indium atoms have been replaced by tin atoms, indium oxide in which from 10 to 70% of the oxygen atoms have been replaced by fluorine atoms, tin oxide in which from 2 to 60% of the tin atoms have been replaced by antimony atoms, tin oxide in which from 10 to 70% of the oxygen atoms have been replaced by fluorine atoms, zinc oxide in which from 1 to 30% of the zinc atoms have been replaced by aluminium atoms, zinc oxide in which from 2 to 30% of the zinc atoms have been replaced by indium atoms, zinc oxide in which from 2 to 30% of the zinc atoms have been replaced by gallium atoms, perovskite and compounds of the composition AₓBO_{3-y},
where
0.01 < x < 3,
0.001 < y < 1.5,
A = Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H or NH₄, and
B = W, Mo or Re,
and where the average particle size, measured via ultracentrifugation, is smaller than 200 nm,
and where the surface of the oxide particles has been modified with a polyvinyl acetal, or
oxide particles selected from the group consisting of indium oxide in which from 10 to 70% of the oxygen atoms have been replaced by fluorine atoms, tin oxide in which from 10 to 70% of the oxygen atoms have been replaced by fluorine atoms, zinc oxide in which from 1 to 30% of the zinc atoms have been replaced by aluminium atoms, zinc oxide in which from 2 to 30% of the zinc atoms have been replaced by indium atoms, zinc oxide in which from 2 to 30% of the zinc atoms have been replaced by gallium atoms, perovskite and compounds of the composition AₓBO_{3-y},
where
0.01 < x < 3,
0.001 < y < 1.5,
A = Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H or NH₄, and
B = W, Mo or Re,
and where the average particle size, measured via ultracentrifugation, is smaller than 200 nm,
and where the surface of the oxide particles has been modified with a compound of the general formula (I)
SiR¹R²R³R⁴ (I)
R¹ = alkyl substituent having from 1 to 30 carbon atoms, R² = alkyl substituent having from 1 to 30 carbon atoms or alkoxy substituent having from 1 to 30 carbon atoms or Cl or Br or I,
R³ = alkyl substituent having from 1 to 30 carbon atoms or alkoxy substituent having from 1 to 30 carbon atoms or Cl or Br or I,
R⁴ = alkoxy substituent having from 1 to 30 carbon atoms or Cl or Br or I.

2. Use of the oxide particles according to Claim 1 for producing the compositions according to Claim 1.

3. Process for producing a composition made of a transparent thermoplastic polymer and oxide particles selected from the group consisting of indium oxide in which from 2 to 30% of the indium atoms have been replaced by tin atoms, indium oxide in which from 10 to 70% of the oxygen atoms have been replaced by fluorine atoms, tin oxide in which from 2 to 60% of the tin atoms have been replaced by antimony atoms, tin oxide in which from 10 to 70% of the oxygen atoms have been replaced by fluorine atoms, zinc oxide in which from 1 to 30% of the zinc atoms have been replaced by aluminium atoms, zinc oxide in which from 2 to 30% of the zinc atoms have been replaced by indium atoms, zinc oxide in which from 2 to 30% of the zinc atoms have been replaced by gallium atoms, perovskite and compounds of the composition AₓBO_{3-y},
where
0.01 < x < 3,
0.001 < y < 1.5,
A = Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H or NH₄, and
B = W, Mo or Re,
by precipitating precursors of the oxide particles in the presence of one or more surface-modifying components, calcining the resultant powders under reducing conditions and then modifying the surface of the particles with a polyvinyl acetal or with a compound of the general formula (I)
SiR¹R²R³R⁴ (I)
R¹ = alkyl substituent having from 1 to 30 carbon atoms,
R² = alkyl substituent having from 1 to 30 carbon atoms or alkoxy substituent having from 1 to 30 carbon atoms or Cl or Br or I,
R³ = alkyl substituent having from 1 to 30 carbon atoms or alkoxy substituent having from 1 to 30 carbon atoms or Cl or Br or I,
R⁴ = alkoxy substituent having from 1 to 30 carbon atoms or Cl or Br or I,
and, prior to, during or after the polymerization of the transparent, thermoplastic polymer, the resultant oxide particles are added to the transparent thermoplastic polymer or to the monomers from which the transparent thermoplastic polymer is polymerized.

4. Process according to Claim 3, **characterized in that**
the reduction during the calcination process is achieved via carbon monoxide, carbon monoxide nitrogen, water vapour, hydrogen or forming gas.

5. Process according to either Claim 3 or 4, **characterized in that**
the thermoplastic polymer is a polycarbonate or a copolycarbonate.

6. Process according to one of Claims 3 to 5, **characterized in that**
the amount of the oxide particles added to the polymer is from 0.1 to 2 parts by weight per 100 parts by weight of transparent, thermoplastic polymer.

7. Use of the compositions according to Claim 1 for producing sheets, foils, panels, roof systems or other products.

8. Process for producing products made of compositions according to Claim 1 encompassing the processing of the compositions via extrusion or injection moulding.

9. Products comprising the compositions according to Claim 1.

10. Sheets or foils or panels or roof systems, comprising the compositions according to Claim 1.

## Revendications

1. Compositions contenant
a) un polymère thermoplastique transparent et
b) des particules d'oxyde choisies dans le groupe constitué par l'oxyde d'indium dans lequel 2 à 30 % des atomes d'indium sont remplacés par des atomes d'étain, l'oxyde d'indium dans lequel 10 à 70 % des atomes d'oxygène sont remplacés par des atomes de fluor, l'oxyde d'étain dans lequel 2 à 60 % des atomes d'étain sont remplacés par des atomes d'antimoine, l'oxyde d'étain dans lequel 10 à 70 % des atomes d'oxygène sont remplacés par des atomes de fluor, l'oxyde de zinc dans lequel 1 à 30 % des atomes de zinc sont remplacés par des atomes d'aluminium, l'oxyde de zinc dans lequel 2 à 30 % des atomes de zinc sont remplacés par des atomes d'indium, l'oxyde de zinc dans lequel 2 à 30 % des atomes de zinc sont remplacés par des atomes de gallium, les pérovskites et les composés de composition AₓBO_{3-y},
dans laquelle
0,01 < x < 3,
0,001 < y < 1,5,
A = Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H ou NH₄, et
B = W, Mo ou Re,
la taille de particule moyenne, mesurée par ultracentrifugation, étant inférieure à 200 nm,
et la surface des particules d'oxyde étant modifiée avec un polyvinylacétal, ou
des particules d'oxyde choisies dans le groupe constitué par l'oxyde d'indium dans lequel 10 à 70 % des atomes d'oxygène sont remplacés par des atomes de fluor, l'oxyde d'étain dans lequel 10 à 70 % des atomes d'oxygène sont remplacés par des atomes de fluor, l'oxyde de zinc dans lequel 1 à 30 % des atomes de zinc sont remplacés par des atomes d'aluminium, l'oxyde de zinc dans lequel 2 à 30 % des atomes de zinc sont remplacés par des atomes d'indium, l'oxyde de zinc dans lequel 2 à 30 % des atomes de zinc sont remplacés par des atomes de gallium, les pérovskites et les composés de composition AₓBO_{3-y},
dans laquelle
0,01 < x < 3,
0,001 < y < 1,5,
A = Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H ou NH₄, et
B = W, Mo ou Re,
la taille de particule moyenne, mesurée par ultracentrifugation, étant inférieure à 200 nm,
et la surface des particules d'oxyde étant modifiée avec un composé de formule générale (I)
SiR¹R²R³R⁴ (I)
R¹ = substituant alkyle de 1 à 30 atomes C,
R² = substituant alkyle de 1 à 30 atomes C ou substituant alcoxy de 1 à 30 atomes C ou Cl ou Br ou I, R³ = substituant alkyle de 1 à 30 atomes C ou substituant alcoxy de 1 à 30 atomes C ou Cl ou Br ou I, R⁴ = substituant alcoxy de 1 à 30 atomes C ou Cl ou Br ou I.

2. Utilisation des particules d'oxyde selon la revendication 1 pour la fabrication des compositions selon la revendication 1.

3. Procédé de fabrication d'une composition à partir d'un polymère thermoplastique transparent et de particules d'oxyde choisies dans le groupe constitué par l'oxyde d'indium dans lequel 2 à 30 % des atomes d'indium sont remplacés par des atomes d'étain, l'oxyde d'indium dans lequel 10 à 70 % des atomes d'oxygène sont remplacés par des atomes de fluor, l'oxyde d'étain dans lequel 2 à 60 % des atomes d'étain sont remplacés par des atomes d'antimoine, l'oxyde d'étain dans lequel 10 à 70 % des atomes d'oxygène sont remplacés par des atomes de fluor, l'oxyde de zinc dans lequel 1 à 30 % des atomes de zinc sont remplacés par des atomes d'aluminium, l'oxyde de zinc dans lequel 2 à 30 % des atomes de zinc sont remplacés par des atomes d'indium, l'oxyde de zinc dans lequel 2 à 30 % des atomes de zinc sont remplacés par des atomes de gallium, les pérovskites et les composés de composition AₓBO_{3-y},
dans laquelle
0,01 < x < 3,
0,001 < y < 1,5,
A = Ca, Sr, Ba, Al, In, Sn, Pb, Cu, Ag, Cd, Li, Na, K, Rb, Cs, La, Ce, Pr, Nd, Sm, Eu, Gd, Tb, Dy, Ho, Er, Tm, Yb, Lu, H ou NH₄, et
B = W, Mo ou Re,
selon lequel des précurseurs des particules d'oxyde sont précipités en présence d'un ou de plusieurs composants modificateurs de surface, les poudres obtenues sont calcinées en conditions réductrices, puis la surface des particules est modifiée avec un polyvinylacétal ou avec un composé de formule générale (I)
SiR¹R²R³R⁴ (I)
R¹ = substituant alkyle de 1 à 30 atomes C,
R² = substituant alkyle de 1 à 30 atomes C ou substituant alcoxy de 1 à 30 atomes C ou Cl ou Br ou I,
R³ = substituant alkyle de 1 à 30 atomes C ou substituant alcoxy de 1 à 30 atomes C ou Cl ou Br ou I, R⁴ = substituant alcoxy de 1 à 30 atomes C ou Cl ou Br ou I,
et les particules d'oxyde obtenues sont ajoutées avant, pendant ou après la polymérisation du polymère thermoplastique transparent au polymère thermoplastique transparent ou aux monomères à partir desquels le polymère thermoplastique transparent est polymérisé.

4. Procédé selon la revendication 3, **caractérisé en ce que** la réduction lors de la calcination a lieu par du monoxyde de carbone, du monoxyde de carbone-azote, de la vapeur d'eau, de l'hydrogène ou un mélange hydrogène-azote.

5. Procédé selon l'une quelconque des revendications 3 ou 4, **caractérisé en ce que** le polymère thermoplastique est un polycarbonate ou copolycarbonate.

6. Procédé selon l'une quelconque des revendications 3 à 5, **caractérisé en ce que** les particules d'oxyde sont ajoutées au polymère en une quantité de 0,1 à 2 parties en poids pour 100 parties en poids du polymère thermoplastique transparent.

7. Utilisation des compositions selon la revendication 1 pour la fabrication de plaques, de films, de vitres, de toits et d'autres produits.

8. Procédé de fabrication de produits à partir de compositions selon la revendication 1, comprenant l'usinage des compositions par extrusion ou moulage par injection.

9. Produits contenant les compositions selon la revendication 1.

10. Plaques ou films ou vitres ou toits, contenant les compositions selon la revendication 1.
